# EUROPEAN PATENT SPECIFICATION

(11) **EP 3 803 302 B1**
(45) Date of publication and mention of the grant of the patent: **03.08.2022**
(21) Application number: 19737900.1
(22) Date of filing: 07.06.2019
(51) Int. Cl.: G01K 3/00

(54) **TEMPERATURE SENSING TAPE**
TEMPERATURFÜHLBAND
BANDE DE DÉTECTION DE TEMPÉRATURE

(30) Priority: 08.06.2018 IT 201800006157
(43) Date of publication of application: 14.04.2021
(73) Proprietor: TENET S.R.L. CON UNICO SOCIO, 31032 Casale Sul Sile (TV) (IT)
(72) Inventor: CAVALLI, Manuele, 31032 Casale Sul Sile (TV) (IT)
(74) Representative: Maroscia, Antonio
(86) International application number: PCT/IB2019/054769
(87) International publication number: WO 2019/234704

(56) References cited:
- CA-A1- 2 203 447

## Description

### TECHNICAL FIELD

The present invention relates to a temperature sensing tape, a system for determining the presence and/or the position of a thermal variation indicative of an overheating localized on a surface and to the operating method thereof.

The present invention further relates to a system for determining the presence and/or the position of a thermal variation indicative of an overcooling/freezing localized on a surface and to the operating method thereof.

In particular, the present invention concerns determination of the presence and the position of surface thermal variations caused by conditions of surface overheating or overcooling/freezing preferably in a building, for example the roof or other parts of the building itself; to which the following discussion will explicitly refer without loss of generality.

### BACKGROUND ART

The need to be able to keep the temperature of some critical areas of a building under control is a common requirement nowadays, for example the roof, generally at the flues/chimneys, in order to promptly determine abnormal temperature increases and promptly notify any fire hazard conditions, due for example to localized overheating.

The need to be able to locate surfaces of a building is also known, for example of a roof or of a floor, pipes, in which a condition of freezing/formation of ice occurs.

The application CA 2 203 447 concerns a control system to display, by means of a panel, overtemperature conditions in the wings of an aircraft. The system comprises overheating detection devices permanently installed in the wings. Each overheating detector device comprises a loop-shaped supply line for connection to the panel terminals and a series of resistors arranged in series in a loop on the supply line.

### DISCLOSURE OF INVENTION

The object of the present invention is to provide an inexpensive and robust system which is easy and simple to install and which is able to satisfy the above needs.

This object is achieved by the present invention relative to a temperature sensing tape, as defined in the attached claims.

The present invention also relates to a system produced according to the attached claims, which determines through at least a temperature sensing tape, the presence and the position of a pre-set thermal variation on a surface in which said variation is indicative of an overheating or an overcooling/freezing of the surface.

The present invention further relates to a method that determines, through at least one temperature sensing tape, the presence and the position of a pre-set thermal variation on a surface caused by overheating or overcooling/freezing, as defined in the attached claims.

### BRIEF DESCRIPTION OF THE DRAWINGS

The present invention will now be described with reference to the attached drawings, which illustrate a non-limiting embodiment example thereof, in which:
- Figure 1 schematically shows a system for sensing the presence and the position of a thermal variation indicative of overheating on a roof of a building, produced according to the teachings of the present invention,
- Figure 2 shows a temperature sensing tape comprised in the system shown in Figure 1,
- Figure 3 is a plan view of the temperature sensing tape shown in Figure 2,
- Figure 4 is a longitudinal section of the temperature sensing tape shown in Figure 3,
- Figure 5 shows a portion of temperature sensing tape applied to the surface,
- Figure 6 shows a variation of the system shown in Figure 1, while
- Figure 7 is a plan view in detail of the temperature sensing tape produced according to the present invention.

### BEST MODE FOR CARRYING OUT THE INVENTION

The present invention will now be described in detail with reference to the attached Figures to enable a person skilled in the art to produce it and use it. Various modifications to the embodiments described will be immediately evident to persons skilled in the art and the general principles described can be applied to other embodiments and applications without, thereby, departing from the scope of the present invention, as defined in the attached claims. Therefore, the present invention must not be considered limited to the embodiments described and illustrated, but must be accorded the widest scope in accordance with the principles and characteristics described and claimed herein.

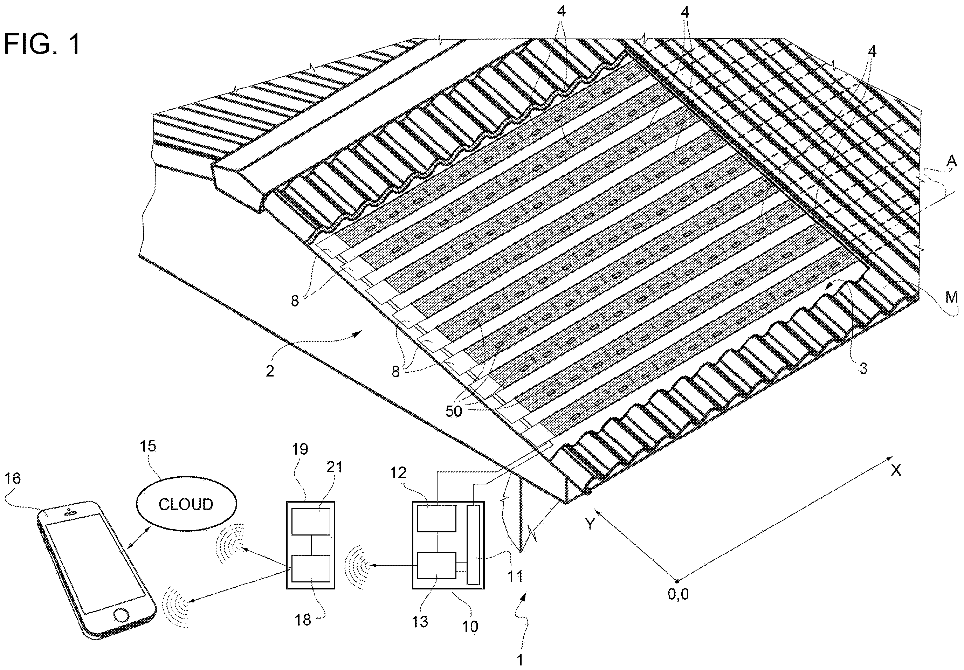

With reference to Figure 1, the number 1 designates overall a system for determining the presence and/or the position of a temperature variation indicative preferably of an overheating in an area/surface of a building.

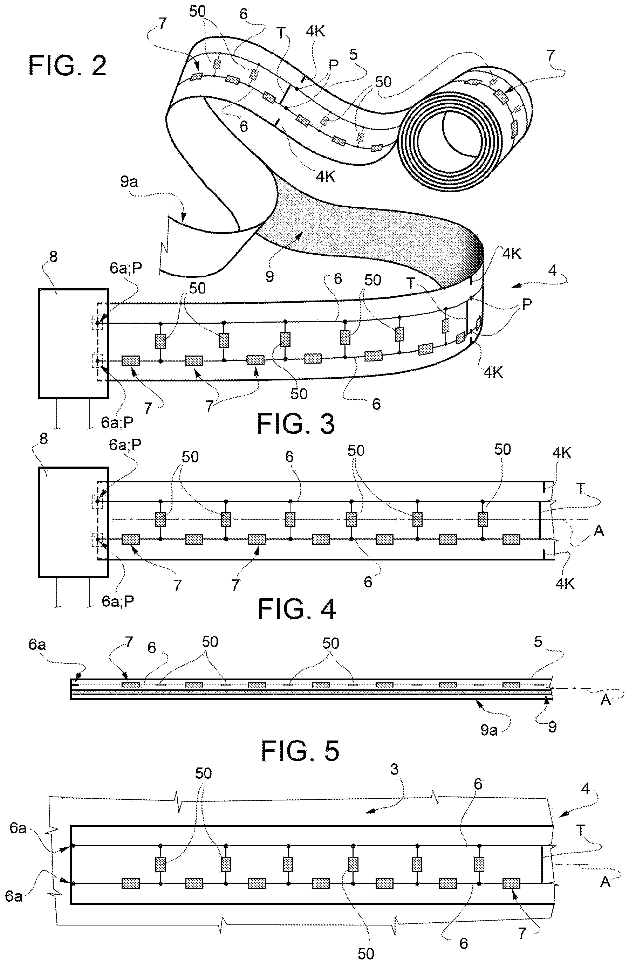

According to a preferred embodiment, the system 1 is configured to determine the presence and the position of the temperature variation preferably indicative of the overheating in areas/surfaces of a building which are part of the roof 2 of the building. As shown in the example of Figure 2, the roof 2 can be preferably provided with an insulation system 3 and at least a covering M in flat/curved tiles arranged above the insulation system 3 so as to cover it.

Purely by way of non-limiting example, the following description will explicitly refer, without loss of generality, to a system 1 that determines the presence and the position of a thermal variation indicative of an overheating on a surface of the insulation system.

It should be understood, however, that the present invention is not limited to determination of the presence and position of an overheating of a surface, but according to a possible embodiment variation can be applied to determine the position of a surface in which a condition of overcooling/freezing occurs.

It is further understood that the present invention should not be considered limited to detecting the state of localized overheating or overcooling/freezing of the roof and/or of a specific area of the roof, for example corresponding to the insulation system, but may be used, on the basis of the following description, to detect the presence and the position of an overheating or overcooling/freezing on any other area/surface of the building or component parts thereof.

With reference to Figure 1, the system 1 comprises one or more high-flexibility thin temperature sensing tapes 4, each of which has an elongated shape, preferably rectangular, extends along a longitudinal axis A and is designed to be arranged with its lower largest surface resting on the surface of the roof 2, for example on an upper surface portion of the floor 3. The temperature sensing tapes 4 are preferably easy to cut transversal to the longitudinal axis A along their entire width, and may be arranged on the roof 2, preferably side-by-side and parallel to one another, at pre-set distances from one another. The temperature sensing tapes 4 are preferably arranged resting on the surface so as to be installed and easily separated/removed from the same. For a better understanding and greater clarity of the following description, Figure 1 shows an X-Y Cartesian reference system arranged roughly coplanar with the surface of the roof 2 to be monitored in which the X axis (abscissa) is parallel to the axes A of the temperature sensing tapes 4, and the Y axis (ordinate) is orthogonal to the same.

With reference to the accompanying Figures, each temperature sensing tape 4 can comprise: at least one support layer 5 made of flexible material, easy to cut transversally, and electrically insulating, and an electric measurement circuit. The support layer 5 is structured to support the electric measurement circuit. The electric measurement circuit comprises at least two electric wires 6.

The support layer 5 is made by means of a high flexibility (high pliability) thin plastic film. The high flexibility of the support layer 5 allows, on the one hand, the temperature sensing tape 4 to be rolled up, thus conveniently obtaining a roll that is designed adapted to be transported manually, especially on a roof, and simplifies manual application of the temperature sensing tape 4 on the surface to be monitored (Figure 2).

The support layer 5 can be made of any high-flexibility material such as, for example, rubber, plastic, paper, fabric or similar materials. The Applicant has found that a particularly suitable film for producing the temperature sensing tape 4 may be based on polyimide.

It should be noted that according to an embodiment, the film could be made of a composite material, preferably FR4 or similar.

In particular, the Applicant has found that a particularly suitable support layer 5 may be obtained by means of a thin KAPTON^{®}-based film.

Preferably, the width of the temperature sensing tape 4 may expediently range from approximately 10 mm to approximately 25 mm. Preferably, the thickness of the support layer 5 may range from 50 micron to 350 micron. It is understood, however, that the support layer 5 is structured/sized so as to guarantee a relatively high robustness, necessary for the specific building application in question.

With reference to the accompanying Figures, the wires 6 are made of electrically conductive material, for example copper or aluminium or similar, they are side-by-side and spaced from one another at a pre-set distance, and extend along the temperature sensing tape 4 parallel to said longitudinal axis A. Preferably, the wires 6 can be filiform and about rectilinear. It is understood, however, that the wires 6 could be plate-like (flat cables) and/or have any similar shape suited to the purpose of the present invention.

The electric measurement circuit of the temperature sensing tape 4 further comprises a plurality of resistors 7, which are arranged along at least one of the wires 6, connected in series to one another, at pre-set distances from one another (measured along the X axis) and have respective pre-set resistances. The reciprocal distance between the electric resistors 7 along the axis A depends on the resolution of the desired temperature monitoring and/or on the length of the temperature sensing tape 4. The distance between one resistor 7 and the other resistor 7 along the temperature sensing tape 4 may be between approximately 20 cm and approximately 70 cm, preferably approximately 50 cm.

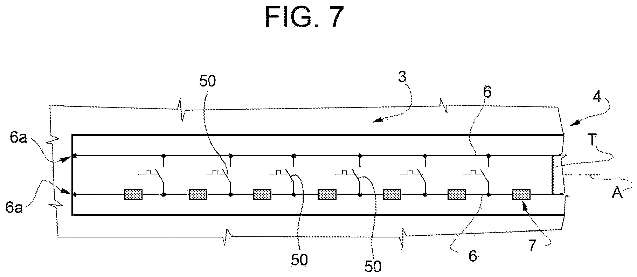

With reference to Figures 2 and 7, the electric measurement circuit of the temperature sensing tape 4 further comprises a plurality of thermally actuated electric devices 50, each of which is connected between the two wires 6 at a resistor 7 and is designed, in use, to be actuated based on the temperature to vary the electric resistance of the temperature sensing tape 4 based on the position of the actuated electric device 50.

According to a preferred embodiment shown in Figures 2-5 and 7, the thermally actuated electric devices 50 can comprise thermally actuated switch modules configured to switch from an open state to a closed state when the temperature present on the tape at the switch modules reaches a pre-set temperature threshold. The pre-set temperature threshold can be associated with a critical high temperature, which is indicative of a condition of overheating.

It is understood that if the system is configured to determine, by means of the temperature sensing tape 4, the presence and position of overcooling/freezing, the pre-set temperature threshold may correspond to a critical low temperature (for example lower than 0°C) indicative of the condition of overcooling/freezing. In this case, the thermally actuated electric devices 50 may be configured so as to switch to closing when the temperature at the electric device 50 reaches the low temperature. In this case, measurement of the resistance of the tape is carried out as described below and thus allows determination of the position of the closed thermocontact along the tape 4 and therefore indication of the condition of overcooling /freezing which can be indicative, for example, of the presence of ice on the tape and therefore on the surface below.

According to a preferred embodiment shown in Figure 7, the electric devices 50 may comprise thermocontacts or thermo-switches or other similar temperature-dependent switches, and each have a terminal connected to the second wire and the other terminal connected to the terminal downstream of a relative resistor 7. It is understood that the electric devices 50 may comprise any temperature-dependent switch provided with an electric, electronic, electromechanical or similar circuit/device.

When the temperature threshold is reached at the thermocontact, the latter closes. The thermocontact thus connects the two electric wires 6 at a resistor 7 determining a resistance variation of the tape which in this case corresponds to the sum of the resistances of the resistors positioned upstream of the closed thermocontact. The measurement of the resistance thus allows determination of the position of the closed thermocontact along the tape and indication of the overheating.

It is understood that if the temperature threshold of the thermocontact corresponds to the low temperature, measurement of the resistance allows determination of the position of the closed thermocontact along the tape and consequently determination of the coordinate of the overcooling/freezing relative to the X axis.

With reference to Figures 2-5 and 7, the wires 6, and/or the resistors 7 and/or the electric devices 50 can be embedded/enclosed in the support layer 5. Preferably, the support layer 5 can be made of waterproof material.

It is understood, however, that according to an embodiment variation the electrically actuated electric devices 50 can comprise thermoresistors. The thermoresistors can be PTC (Positive Temperature Coefficient) resistors or NTC (Negative Temperature Coefficient) resistors. The temperature variation of the tape 4 at the thermoresistor determines a corresponding resistance variation of the tape associated with the position of the thermoresistor. The position of the thermoresistor that has undergone the resistance variation is indicative of the axial position (X) of the thermal variation along the tape 4.

For example, the thermoresistor can be configured so as to considerably reduce its resistance when the temperature reaches the pre-set threshold. In this condition the thermoresistor goes to a state in which it operates similarly to a switch that connects the two electric wires determining a resistance variation of the tape. In this case the resistance of the tape corresponds roughly to the sum of the resistances of the resistors positioned upstream of the operative thermoresistor, and the system is therefore able to determine, based on the resistance, the position of the latter and therefore the position of the thermal variation caused by the overheating.

Preferably, the temperature sensing tape 4 can comprise an adhesive layer 9 adapted to permanently fix the temperature sensing tape 4 on the floor 3 of the roof 2 to be monitored. The Applicant has found, for example, that it could be expedient to use a band-shaped removable film 9a which covers the adhesive layer 9 and which in use is separated from the temperature sensing tape 4 to allow fixing of the temperature sensing tape 4 on the roof 2. The manufacture and/or fixing of the wires 6 and the resistors 7 on the support layer 5 can be carried out by means of any assembly process such as, for example, by deposition, photolithography, plasma, printing with electrostatic adhesives, and using conductive inks or pastes, graphite, etc.

According to an embodiment example, shown in Figure 1, the temperature sensing tape 4 has at an axial end two terminals 6a connected to the two corresponding two wires 6.

Preferably the terminal 6a consists of an end of a wire 6 present at an end of the sensing tape 4. The terminal 6a can be expediently obtained by cutting the tape 4 at preferential cutting points. The surface of the tape 4 can be expediently provided with notches 4K, for example moulded at pre-set distances from one another and relative to the electric components 7, indicative of the preferential cutting points. In this way, an indication is given to the installer on the point at which to cut the tape 4 to obtain the terminals 6a, preventing damage to the resistors 7 and the electric components 50.

Preferably, the terminal 6a can comprise a pad P made of electric conductive material, for example copper or similar, shaped to facilitate the electric connection with electric terminals/connectors or similar. The pads P can be arranged on/in the layer 5 of the tape 4 along the wires 6 at the notches 4K. In use, execution of the cut of the tape 4 roughly transversally to the longitudinal axis A at the notches 4K allows the pads P to be obtained on the cut longitudinal end of the tape 4 thus forming the terminals 6a.

Preferably, as shown in the example of Figure 1, the system 1 can comprise a plurality of temperature sensing tapes 4. The temperature sensing tapes 4 can be arranged on the surface of the roof 2, substantially side-by-side, parallel to one another, each with its own end, containing the two terminals 6a in a pre-set position relative to the Y axis.

With reference to a preferred embodiment example shown in Figure 1, the system 1 further comprises a plurality of electronic modules 8 which are electrically connected to the respective temperature sensing tapes 4. The electric connection between the electronic module 8 and the relative temperature sensing tape 4 can be provided for example by means of electric connectors/terminals (not illustrated). In use, the cut end of the tape 4 can be expediently inserted into the electric connectors/terminals of the electronic module 8. Closing of the terminal screws provides the electric contact of the electric measurement module 8 with the pads P defining the terminals 6a. According to a possible embodiment, each electric measurement module 8 can be configured so as to determine the electric resistance between the two terminals 6a.

The system 1 can further comprise an electronic device 10 which is electrically connected to the electronic modules 8 to receive the resistances measured/determined by the same. For this purpose, the electronic modules 8 can be connected through respective terminals to a common data/signal exchange bus/line connected in turn to a data/signal processing module 11 of the electronic device 10. The electronic modules 8 can furthermore be connected, preferably through respective terminals, to a common electric power supply bus/line connected in turn to an electric power supply device 12 of the electronic device 10. Preferably, the electronic modules 8 can be connected along the electric line and along the data line in cascade one after the other. Preferably the two common power supply and data/signal exchange electric lines can be formed of sections of connection lines between the adjacent electronic modules 8 as shown in the example of Figure 1.

The data/signal processing module 11 of the electronic device 10 can be configured so as to receive for each temperature sensing tape 4 the relative resistance and determine the presence and/or the position of the overheating along the temperature sensing tape 4 based on the determined resistance. The resistance variation is generated by the closing of an electric device 50 in response to the overheating of the tape 4 at the area surrounding the electric device 50.

In the example illustrated, the pre-set position of the temperature sensing tape 4 on the roof 2 along the Y axis allows information to be obtained on the position of the overheated area relative to the second Y axis.

With reference to Figure 1, the electronic device 10 can further comprise an electronic communication stage 13 configured to communicate data from and to systems 15 and/or remote communication devices 16. According to an embodiment example shown in Figure 1, the communication between the electronic device 10 and the systems 15 and/or remote communication devices 16 can be obtained by means of a communication device 18 arranged for example in a central electronic control unit 19. The central electronic control unit 19 can be a domestic electric control unit provided with a processing unit 21 which centrally supervises the system 1 and preferably, but not necessarily, other domotic/detection systems (not illustrated) present in the building. The local communication device 18 can comprise a communication module able to establish communication between one or more communication networks. For example, the communication module can comprise a gateway which carries out a short-range communication to communicate with the electronic communication stage 13 by means of, for example, a domestic communication network. The gateway can furthermore carry out a long-range communication and operate for example according to LoRa technology to communicate with an internet/telephone network thus transmitting data to the systems 15 and/or to the remote communication devices 16. Instead, as regards the electronic communication stage 13, it can comprise, for example, a wireless data transmission module (Wi-Fi, Wireless, Bluetooth). It is understood, however, that the electronic communication stage 13 could comprise a wired data/signal transmission module.

As regards the systems 15, they can comprise cloud computing systems or similar. The remote communication devices 16 can comprise mobile user communication devices, for example smartphones or similar.

The central electronic control unit 19 can be configured so as to determine the presence and position of the overheating in an area based on the resistance, and provide the same in the form of information/data and/or generate alarm signals indicative of the overheating/danger.

For example, according to a possible application, the tape 4 can be arranged at the floor 3 of the roof 2 close to the flue (not illustrated) and the central electronic control unit 19 can be configured to detect the presence and position of the overheating and provide the systems 15 and/or the devices 16 with alarm messages/signals indicative of a condition of danger of overheating/fire of the roof/flue.

It is understood that according to a possible application of the present invention, the tape 4 may be arranged on a surface of a floor to detect the thermal variation associated with the overcooling/freezing of the same.

It is understood that according to a possible application of the present invention, the tape 4 may be arranged on a surface adjacent to a skylight, to detect the thermal variation associated with overheating of the same.

According to another possible application, the tape 4 can be arranged on the roof 2 close to the upper surface of solar/photovoltaic panels (not illustrated), and the central electronic control unit 19 can be configured to determine a condition of localized overheating of said panels to provide the systems 15 and/or the devices 16 with alarm messages/signals indicative of a condition of request for maintenance of/intervention on said panels.

According to another possible application, the system 1 comprises a plurality of temperature sensing tapes 4 arranged on the surface to be monitored. The temperature sensing tapes 4 are arranged on a surface which, in the example illustrated in Figure 1, corresponds for example to the floor 3 (Figure 1). The central electronic control unit 19 can be configured to detect localized overheating to provide the systems 15 and/or the devices 16 with alarm data/messages/signals indicative of a condition of request for maintenance of the floor 3/roof 2 and the relative critical positions subject to overheating. In this case the system is able to signal the exact position of the area/areas of the roof along the axis (Y) in which the intervention is requested since it corresponds/they correspond to the area/areas covered by the tape/tapes 4.

The data/messages/signals and/or data indicative of the presence and position of the overheating (overcooling) can be expediently displayed to a user through the mobile communication device 16. Preferably, a graphic thermal map can be generated indicative of the distribution of the overheated (or overcooled) areas, detected through the temperature sensing tapes 4, with display of the same.

The operation of the system 1 entails measurement of the resistances of the electric measurement circuits of one or more temperature sensing tapes 4 arranged on the surface to be monitored, determination of the presence and position of the overheating area of the surface monitored along the X axis and the Y axis based on the resistance measured, and generation of the signals/data/messages indicative of the presence and position coordinates (X,Y) of the overheating detected on the surface towards the system 15 and/or the devices 16. In particular the electronic device 10 associated with each tape 4 can transmit via the electronic communication stage 13 of the central electronic control unit 19 the signals/data/messages containing the presence and the position of the overheating on the surface to the cloud systems and/or to at least one communication device 16.

It is understood that for operation of the system 1 in the embodiment variation that determines overcooled areas, the system 1 can provide for measurement of the resistances of the electric measurement circuits of one or more temperature sensing tapes 4 arranged on the surface to be monitored, determination of the presence and position of the overcooling/freezing area of the surface monitored along the X axis and the Y axis based on the resistance measured, and generation of the signals/data/messages indicative of the presence and position coordinates (X,Y) of the overcooling/freezing detected on the surface towards the system 15 and/or the devices 16. In particular the electronic device 10 associated with each tape 4 can transmit via the electronic communication stage 13 of the central electronic control unit 19 the signals/data/messages containing the presence and the position of the overcooling/freezing on the surface to the cloud systems and/or to at least a communication device 16.

The system described above is extremely advantageous since it allows the pre-set objects described above to be achieved.

The temperature sensing tape can be easily adapted lengthwise to the dimensions of the surface. For this purpose, it can be cut by the installer without causing malfunctioning of the system. In this regard it should be highlighted that an overheating detection device described in the application CA 2 203 447 is not suitable for mounting on a roof, or on a skirting board or on a panel, since it cannot be adapted each time to the dimensions of the same. A transverse cut would in fact determine interruption of the U connection lines of the switches. The longitudinal dimension of the tape described above (length), on the other hand, can be easily varied/adapted each time through a simple transverse cut, according to requirements, in particular based on the dimensions of the object on which it is installed, with all the resulting advantages.

The data relative to the overheated (or frozen) areas detected by the system can be used for statistical purposes, for evaluation of the insulation quality. The system can also be used by other domotic systems present in the building such as, for example, roof cooling systems with the use of water and/or radiation data for solar/photovoltaic panels, since it is able to provide an alarm linked to the fact that the panel surface is dirty and does not reach the scheduled thermal power with the same radiation.

Lastly, it is clear that modifications and variations can be made to the system and the tape described and illustrated above without departing from the scope of the present invention defined by the attached claims.

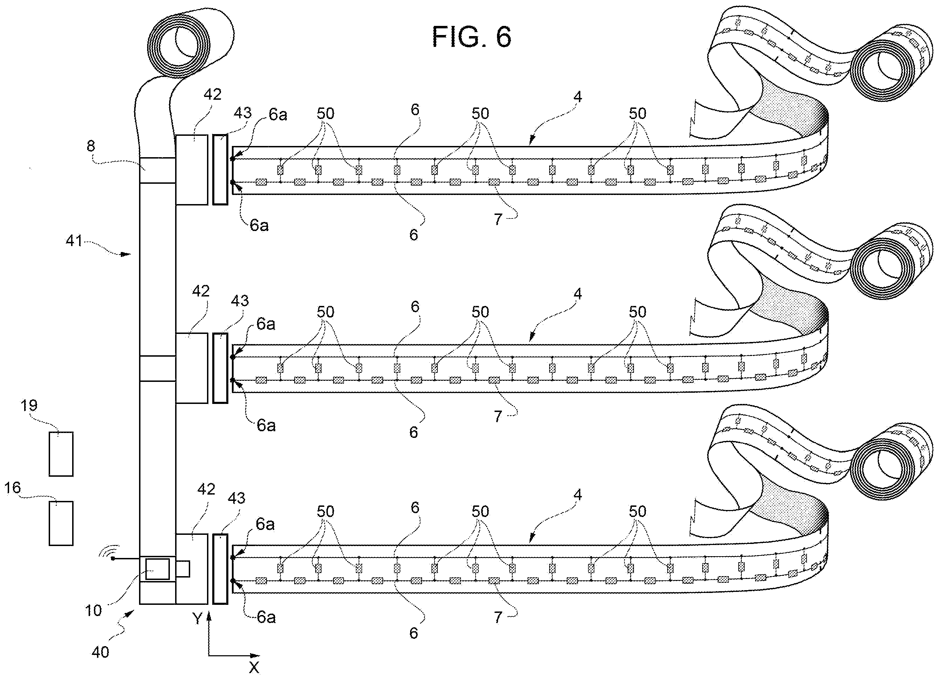

The embodiment illustrated in Figure 6 is relative to a system 40, which is similar to the system 1 shown in Figure 1 and the component parts of which will be designated, where possible, by the same reference numbers as those that designates corresponding parts of the system 1.

With reference to Figure 6, the system 40 differs from the system 1 shown in Figure 1 due to the fact that, in addition to comprising the flexible sensing tapes 4, it comprises a main flexible tape 41, which internally contains the electronic modules 8 and preferably the processing device 10 and the relative electric connections (described above for the system 1). The main tape 41 preferably has the same structure and material as the sensing tapes 4.

In other words, the main tape 41 comprises a layer identical to the layer 5 described above, and can preferably comprise the adhesive layer 9 and the relative film 9a.

Preferably, the electronic modules 8 are enclosed/embedded in said support layer 5 of the main tape 41 so as to be covered by the same.

As shown in Figure 6, the main tape 41 can be arranged in a direction parallel to the Y axis, at the ends of the temperature sensing tapes 4 so as to be roughly orthogonal to the same. The system 40 can further be provided with lateral connection sections 42 which extend cantilever from the same side of the main tape 41, orthogonal to the same, at the electric module 8 and internally contain, connection wires and/or connection terminals of the electronic module 8. The system 40 can further comprise junction terminals 43 adapted to electrically connect the connection wires or connection terminals of the lateral sections 42 to the electric terminals of the wires 6 of the temperature sensing tapes 4. Preferably, the processing device 10 can be embedded in a lower end of the main tape 41 and have an adjacent lateral section 42 for connection between the latter and a sensing tape 4.

## Claims

1. A temperature sensing tape (4) which is structured to be arranged resting on a surface of a building,
said temperature sensing tape comprising
a thin support layer (5) having an elongated shape which extends along a longitudinal axis (A) and is made of electrically insulating flexible material,
said support layer (5) is made by a high flexibility thin plastic film that can be cut transversally to said longitudinal axis (A) in order to vary its longitudinal dimension,
two electric wires (6), which are arranged on/in said support layer (5), extend about rectilinear and parallel to said longitudinal axis (A) and have, about in the area of at least one first end of the tape (4), respective electric connection terminals (6a),
a plurality of electric resistor components (7) which are arranged in series along a said electric wire (6) at pre-set distances from one another,
a plurality of thermally actuated electric devices (50), each of which is connected between a said wire (6) and the other wire (6) at a respective electric resistor component (7), and is designed to be actuated based on the temperature of the portion of layer (5) of the tape which houses the electric device (50) to cause a variation in electric resistance between said electric connection terminals (6a) which is indicative of the position of the electric device (50) along said tape (4).

2. The tape according to claim 1, provided with an adhesive layer (9) coupled to said support layer (5) to fix the tape (4) on said surface to be monitored.

3. The tape according to any one of the preceding claims, having on the surface notches (4K) indicative of the preferential cutting points.

4. The tape according to claim 3, wherein said terminal (6a) comprises a pad (P) made of electric conductive material; said pad (P) is arranged on/in the layer (5) of the tape (4) along said wires (6) at said notches (4K).

5. The tape according to any one of the preceding claims, wherein said electric devices (50) comprise thermally actuated switch modules designed to switch from an open state to a closed state when the temperature of the electric device (50) reaches a pre-set temperature threshold, thus electrically connecting said wires (6) to one another.

6. The tape according to claim 5, wherein said pre-set temperature threshold is associated with a high temperature indicative of a condition of overheating.

7. The tape according to claim 6, wherein said pre-set temperature threshold is associated with a low temperature indicative of a condition of overcooling/freezing.

8. The tape according to any one of the preceding claims, wherein said electric wires (6), said resistors (7) and said electric devices (50) are enclosed/embedded inside said support layer (5) .

9. The tape according to any one of the preceding claims, wherein said support layer (5) is based on polyimide or FR4.

10. The tape according to any one of the preceding claims, having a width ranging from approximately 10 mm to approximately 25 mm.

11. The tape according to any one of the preceding claims, wherein said support layer (5) has a thickness ranging from 50 micron to 350 micron.

12. The tape according to any one of the preceding claims, wherein said electric devices (50) comprise thermoresistors.

13. A system (1)(40) for detecting the presence and the position of a thermal variation on a surface of a building, said system comprising:
a temperature sensing tape (4) made according to any one of the preceding claims, the temperature sensing tape (4) being arranged resting on said surface,
an electronic module (8) which is electrically connected to the connection terminals (6a) of said temperature sensing tape (4) and is configured so as to determine the electric resistance between the connection terminals (6a),
an electronic device (10) which is electrically connected at least to said electronic module (8) to receive said determined electric resistance, and is configured to determine the presence and the position of a thermal variation on said surface, based on the determined electric resistance.

14. The system according to claim 13, comprising a plurality of said sensing tapes (4) which extend parallel to the longitudinal axis (A) side-by-side; and a thin main tape (41) made of flexible material, which is arranged resting on said surface so as to be approximately orthogonal to said sensing tapes (4) and internally comprises said electronic modules (8), each of which is electrically connected to a respective sensing tape (4).

15. The system according to claim 14, wherein said main tape (41) internally comprises said processing device (10).

16. The system according to claims 13 or 14, wherein said main tape (41) comprises a thin support layer (5) having an elongated shape made of flexible and electrically insulating material, said electronic modules (8) being enclosed/embedded in said support layer (5) of said main tape (41) so as to be covered by the same.

17. The system according to claims 13 or 14, wherein said main tape (41) extends at the ends of said temperature sensing tapes (4) so as to be approximately orthogonal to the same and has lateral sections (42) which extend cantilever from the same side of the main tape (41), orthogonal to the same, each at a relative electric module (8) and internally contain electric connection wires.

18. A method for detecting the presence and the position of a thermal variation on a surface, **characterized in that** it comprises the following steps: arranging on said surface at least a first temperature sensing tape (4) made according to any one of the claims from 1 to 12, determining the electric resistance of the temperature sensing tape (4) by means of at least one electronic module (8) electrically connected to said connection terminals (6a) of said temperature sensing tape (4), determining by means of an electronic device (10) the presence and the position of the thermal variation along the tape (4) based on the determined electric resistance.

19. The method according to claim 18 comprising the steps of:
positioning a plurality of temperature sensing tapes (4) on said surface, parallel to one another in respective coordinates (Yi) pre-set relative to a first reference axis (Y) orthogonal to said longitudinal axis (A),
positioning a flexible main tape (41) on said surface parallel to said first reference axis (Y), so that the main tape (41) extends approximately orthogonal to said first temperature sensing tapes (4), said main tape (41) internally containing said electronic modules (8) enclosed/embedded in the same,
electrically connecting the connection terminals (6a) of each first temperature sensing tape (4) to the terminals of relative electronic modules (8) present in the second tape (41),
determining the presence and the position of said thermal variation on said surface based on the electric resistances measured by the electronic modules (8) on the temperature sensing tapes (4) and based on the coordinates of the temperature sensing tapes relative to said first reference axis (Y).

20. The method according to claim 18 or 19, wherein said surface corresponds as required:

## Patentansprüche

1. Temperatur-Sensorband (4), das strukturiert ist, um auf einer Oberfläche eines Gebäudes aufliegend angeordnet zu werden, wobei das Temperatur-Sensorband eine dünne Trägerschicht (5) umfasst, die eine längliche Form hat, die sich entlang einer Längsachse (A) erstreckt und aus elektrisch isolierendem flexiblem Material ist,
wobei die Trägerschicht (5) aus einer hochflexiblen dünnen Kunststofffolie besteht, die quer zur Längsachse (A) geschnitten werden kann, um ihre Längsabmessung zu verändern;
zwei elektrische Drähte (6), die auf/in der Trägerschicht (5) angeordnet sind, etwa geradlinig und parallel zur Längsachse (A) verlaufen und jeweilige elektrische Anschlussklemmen (6a), etwa im Bereich mindestens eines des ersten Bandendes (4), aufweisen;
eine Vielzahl von elektrischen Widerstandskomponenten (7), die entlang eines elektrischen Drahts (6) in voreingestellten Abständen voneinander in Reihe angeordnet sind;
eine Vielzahl von thermisch betätigten elektrischen Vorrichtungen (50), von denen jede zwischen einem Draht (6) und einem anderen Draht (6) an einer jeweiligen elektrischen Widerstandskomponente (7) angeschlossen ist, und so ausgelegt ist, dass es gemäß der Temperatur des Teils der Schicht (5) des Bandes, der die elektrische Vorrichtung (50) aufnimmt, betätigt zu werden, um eine Veränderung des elektrischen Widerstands zwischen den elektrischen Anschlussklemmen (6a) zu bewirken, die die Position der elektrischen Vorrichtung (50) dem Band entlang anzeigt (4).

2. Band nach Anspruch 1, das mit einer Klebeschicht (9) versehen ist, die mit der Trägerschicht (5) verbunden ist, um das Band (4) auf der zu überwachenden Oberfläche zu befestigen.

3. Band nach einem der vorhergehenden Ansprüche, das auf der Oberfläche Kerben (4K) aufweist, die die bevorzugten Schnittpunkte anzeigen.

4. Band nach Anspruch 3, wobei die Anschlussklemme (6a) eine Anschlußfläche (P) aus elektrisch leitendem Material umfaßt, und das Pad (P) auf/in der Schicht (5) des Bandes (4) entlang den Drähten (6) an den Kerben (4K) angeordnet ist.

5. Band nach einem der vorangehenden Ansprüche, wobei die elektrischen Vorrichtungen (50) thermisch betätigte Schaltmodule umfassen, die dafür ausgelegt sind, von einem offenen Zustand in einen geschlossenen Zustand umzuschalten, wenn die Temperatur der elektrischen Vorrichtung (50) eine voreingestellte Temperaturschwelle erreicht, wodurch die Drähte (6) elektrisch miteinander verbunden werden.

6. Band nach Anspruch 5, wobei die voreingestellte Temperaturschwelle einer hohen Temperatur zugeordnet ist, die einen Überhitzungszustand anzeigt.

7. Band nach Anspruch 6, wobei die voreingestellte Temperaturschwelle einer niedrigen Temperatur zugeordnet ist, die einen Unterkühlungs-/Gefrierzustand anzeigt.

8. Band nach einem der vorhergehenden Ansprüche, wobei die elektrischen Drähte (6), die Widerstände (7) und die elektrischen Vorrichtungen (50) innerhalb der Trägerschicht (5) eingeschlossen/eingebettet sind.

9. Band nach einem der vorhergehenden Ansprüche, wobei die Trägerschicht (5) auf Polyimid oder FR4 basiert.

10. Band nach einem der vorhergehenden Ansprüche, das eine Breite im Bereich von etwa 10 mm bis etwa 25 mm aufweist.

11. Band nach einem der vorhergehenden Ansprüche, wobei die Trägerschicht (5) eine Dicke im Bereich von 50 Mikrometer bis 350 Mikrometer aufweist.

12. Band nach einem der vorhergehenden Ansprüche, wobei die elektrischen Vorrichtungen (50) Thermistoren umfassen.

13. System (1)(40) zum Erfassen des Vorhandenseins und der Position einer thermischen Änderung auf einer Oberfläche eines Gebäudes,
wobei das System umfasst:
ein nach einem der vorhergehenden Ansprüche hergestelltes Temperatur-Sensorband (4), wobei das Temperatur-Sensorband (4) auf der Oberfläche aufliegend angeordnet ist;
ein elektronisches Modul (8), das elektrisch mit den Anschlussklemmen (6a) des Temperatur-Sensorbands (4) verbunden ist und konfiguriert ist, um den elektrischen Widerstand zwischen den Anschlussklemmen (6a) zu bestimmen;
ein elektronisches Gerät (10), das zumindest mit dem elektronischen Modul (8) elektrisch verbunden ist, um den bestimmten elektrischen Widerstand zu empfangen, und dazu konfiguriert ist, das Vorhandensein und die Position einer thermischen Veränderung auf der Oberfläche, basierend auf dem bestimmten elektrischen Widerstand, zu bestimmen.

14. System nach Anspruch 13, umfassend eine Vielzahl der Sensorbänder (4), die sich parallel zur Längsachse (A) Seite an Seite erstrecken, und ein dünnes Hauptband (41) aus flexiblem Material, das so angeordnet ist, dass es auf der Oberfläche liegt, um ungefähr orthogonal zu den Sensorbändern (4) zu sein, und intern die elektronischen Module (8) umfasst, von denen jedes elektrisch mit einem entsprechenden Sensorband (4) verbunden ist.

15. System nach Anspruch 14, wobei das Hauptband (41) intern die Verarbeitungsvorrichtung (10) umfasst.

16. System nach Anspruch 13 oder 14, wobei das Hauptband (41) eine dünne Trägerschicht (5) mit einer länglichen Form aus flexiblem und elektrisch isolierendem Material umfasst, wobei die elektronischen Module (8) in der Trägerschicht (5) des Hauptbandes (41) eingeschlossen/eingebettet sind, um von dieser bedeckt zu sein.

17. System nach Anspruch 13 oder 14, wobei sich das Hauptband (41) an den Enden der Temperatur-Sensorbänder (4) so erstreckt, dass es ungefähr orthogonal zu denselben ist, und seitliche Abschnitte (42) aufweist, die freitragend von derselben Seite des Hauptbandes (41) orthogonal zu demselben verlaufen, jeweils an einem relativen elektrischen Modul (8) und intern elektrische Verbindungsdrähte enthalten.

18. Verfahren zum Erfassen des Vorhandenseins und der Position einer thermischen Veränderung auf einer Oberfläche, **dadurch gekennzeichnet, dass** es die folgenden Schritte umfasst: Anordnen auf der Oberfläche mindestens eines ersten Temperatur-Sensorbands (4) hergestellt nach einem der Ansprüche von 1 bis 12; Bestimmen des elektrischen Widerstands des Temperatur-sensorbands (4) mittels mindestens eines elektronischen Moduls (8), das elektrisch mit den Anschlussklemmen (6a) des Temperatur-Sensorbands (4) verbunden ist; Bestimmen mittels eines elektronischen Geräts (10) das Vorhandensein und die Position der thermischen Variation entlang des Bandes (4) basierend auf dem ermittelten elektrischen Widerstand.

19. Verfahren nach Anspruch 18, umfassend die Schritte:
Positionieren einer Vielzahl von Temperatur-Sensorbändern (4) auf der Oberfläche parallel zueinander in jeweiligen Koordinaten (Yi), die relativ zu einer ersten Referenzachse (Y) orthogonal zu der Längsachse (A) voreingestellt sind;
Positionieren eines flexiblen Hauptbandes (41) auf der Oberfläche parallel zu der ersten Referenzachse (Y), so dass sich das Hauptband (41) ungefähr orthogonal zu den ersten Temperatur-Sensorbändern (4) erstreckt, wobei das Hauptband (41) intern die darin eingeschlossenen/eingebetteten elektronischen Module (8) enthält;
elektrisches Verbinden der Anschlussklemmen (6a) jedes ersten Temperatur-Sensorbandes (4) mit den Anschlüssen von entsprechenden elektronischen Modulen (8), die in dem zweiten Band (41) vorhanden sind;
Bestimmung der Anwesenheit und der Position der thermischen Variation auf der Oberfläche basierend auf den elektrischen Widerständen, die von den elektronischen Modulen (8) auf den Temperatur-Sensorbändern (4) gemessen werden, und basierend auf den Koordinaten der Temperatur-Sensorbänder relativ zu der ersten Referenzachse (Y).

20. Verfahren nach Anspruch 18 oder 19, wobei die Oberfläche entspricht nach Bedarf:
zu einer Bodenfläche;
zu einer Oberfläche eines Oberlichts.

## Revendications

1. Bande de détection de température (4) qui est structurée pour être disposée en appui sur une surface d'un bâtiment,
ladite bande de détection de température comprenant
une couche de support mince (5) ayant une forme allongée qui s'étend le long d'un axe longitudinal (A) et est en matériau souple électriquement isolant,
ladite couche de support (5) est constituée d'un film plastique mince à haute flexibilité qui peut être coupé transversalement audit axe longitudinal (A) afin de faire varier sa dimension longitudinale,
deux fils électriques (6), qui sont disposés sur/dans ladite couche de support (5), s'étendent de manière rectiligne et parallèle audit axe longitudinal (A) et présentent, environ dans la zone d'au moins une première extrémité de la bande (4), bornes de connexion électrique respectives (6a),
une pluralité de composants de résistance électrique (7) qui sont agencés en série le long dudit fil électrique (6) à des distances préétablies les uns des autres,
une pluralité de dispositifs électriques actionnés thermiquement (50), dont chacun est connecté entre un fil (6) et un autre fil (6) à un composant de résistance électrique respectif (7), et est conçu pour être actionné en fonction de la température de la partie de la couche (5) du ruban qui loge le dispositif électrique (50) pour provoquer une variation de résistance électrique entre lesdites bornes de connexion électrique (6a) qui est indicative de la position du dispositif électrique (50) le long de ladite bande (4).

2. Bande selon la revendication 1, pourvue d'une couche adhésive (9) couplée à ladite couche support (5) pour fixer la bande (4) sur ladite surface à surveiller.

3. Bande selon l'une quelconque des revendications précédentes, comportant en surface des encoches (4K) indicatives des points de coupe préférentiels.

4. Bande selon la revendication 3, dans laquelle ladite borne (6a) comprend un plot (P) en matériau conducteur électrique; ledit plot (P) est agencé sur/dans la couche (5) de la bande (4) le long desdits fils (6) au niveau desdites encoches (4K).

5. Bande selon l'une quelconque des revendications précédentes, dans laquelle lesdits appareils électriques (50) comprennent des modules interrupteurs actionnés thermiquement conçus pour passer d'un état ouvert à un état fermé lorsque la température de l'appareil électrique (50) atteint un seuil de température prédéfini, connectant ainsi électriquement lesdits fils (6) entre eux.

6. Bande selon la revendication 5, dans laquelle ledit seuil de température prédéfini est associé à une température élevée indiquant une condition de surchauffe.

7. Bande selon la revendication 6, dans laquelle ledit seuil de température prédéfini est associé à une basse température indiquant une condition de surrefroidissement/gel.

8. Bande selon l'une quelconque des revendications précédentes, dans laquelle lesdits fils électriques (6), lesdites résistances (7) et lesdits dispositifs électriques (50) sont enfermés/noyés à l'intérieur de ladite couche de support (5).

9. Bande selon l'une quelconque des revendications précédentes, dans laquelle ladite couche support (5) est à base de polyimide ou FR4.

10. Bande selon l'une quelconque des revendications précédentes, ayant une largeur allant d'environ 10 mm à environ 25 mm.

11. Bande selon l'une quelconque des revendications précédentes, dans laquelle ladite couche support (5) a une épaisseur allant de 50 microns à 350 microns.

12. Bande selon l'une quelconque des revendications précédentes, dans laquelle lesdits dispositifs électriques (50) comprennent des thermistances.

13. Système (1)(40) de détection de la présence et de la position d'une variation thermique sur une surface d'un bâtiment,
ledit système comprenant:
une bande de détection de température (4) réalisée selon l'une quelconque des revendications précédentes, la bande de détection de température (4) étant agencée en appui sur ladite surface;
un module électronique (8) qui est connecté électriquement aux bornes de connexion (6a) de ladite bande de détection de température (4) et est configuré de manière à déterminer la résistance électrique entre les bornes de connexion (6a);
un dispositif électronique (10) qui est connecté électriquement au moins audit module électronique (8) pour recevoir ladite résistance électrique déterminée, et est configuré pour déterminer la présence et la position d'une variation thermique sur ladite surface, sur la base de la résistance électrique déterminée.

14. Système selon la revendication 13, comprenant une pluralité desdites bandes de détection (4) qui s'étendent parallèlement à l'axe longitudinal (A) côte à côte; et une mince bande principale (41) faite d'un matériau flexible, qui est disposée en appui sur ladite surface de manière à être approximativement orthogonale auxdites bandes de détection (4) et comprend intérieurement lesdits modules électroniques (8), dont chacun est électriquement connecté à une bande de détection respective (4).

15. Système selon la revendication 14, dans lequel ladite bande principale (41) comprend intérieurement ledit dispositif de traitement (10).

16. Système selon la revendication 13 ou 14, dans lequel ladite bande principale (41) comprend une fine couche de support (5) ayant une forme allongée faite d'un matériau flexible et électriquement isolant, lesdits modules électroniques (8) étant enfermés/intégrés dans ladite couche de support (5) de ladite bande principale (41) de manière à être recouverts par celle-ci.

17. Système selon les revendications 13 ou 14, dans lequel ladite bande principale (41) s'étend aux extrémités desdites bandes de détection de température (4) de manière à être approximativement orthogonale à celles-ci et a des sections latérales (42) qui s'étendent en porte-à-faux depuis le même côté de la bande principale (41), orthogonale à celle-ci, chacune à un module électrique relatif (8) et contient intérieurement des fils de connexion électrique.

18. Procédé de détection de la présence et de la position d'une variation thermique sur une surface, **caractérisé en ce qu'**il comprend les étapes suivantes: disposer sur ladite surface au moins une première bande sensible à la température (4) réalisée selon l'une quelconque des revendications de 1 à 12; déterminer la résistance électrique de la bande sensible à la température (4) au moyen d'au moins un module électronique (8) connecté électriquement auxdites bornes de connexion (6a) de ladite bande sensible à la température (4); déterminer au moyen de un dispositif électronique (10) la présence et la position de la variation thermique le long de la bande (4) en fonction de la résistance électrique déterminée.

19. Procédé selon la revendication 18 comprenant les étapes de:
positionner une pluralité de bandes de détection de température (4) sur ladite surface, parallèles les unes aux autres selon des coordonnées respectives (Yi) prédéfinies par rapport à un premier axe de référence (Y) orthogonal audit axe longitudinal (A);
positionnement d'une bande principale flexible (41) sur ladite surface parallèle audit premier axe de référence (Y), de sorte que la bande principale (41) s'étend approximativement orthogonalement auxdites premières bandes de détection de température (4), ladite bande principale (41) contenant à l'intérieur lesdits modules électroniques (8) enfermés/intégrés dans celle-ci;
connecter électriquement les bornes de connexion (6a) de chaque première bande de détection de température (4) aux bornes de modules électroniques relatifs (8) présents dans la seconde bande (41);
déterminer la présence et la position de ladite variation thermique sur ladite surface basées sur les résistances électriques mesurées par les modules électroniques (8) sur les bandes de détection de température (4) et basées sur les coordonnées des bandes de détection de température par rapport audit premier axe de référence (Y).

20. Procédé selon la revendication 18 ou 19 dans lequel ladite surface correspond selon les besoins:
à une surface d'un sol,
à une surface d'un puits de lumière.
